# EUROPEAN PATENT SPECIFICATION

(11) **EP 0 815 919 B1**
(45) Date of publication and mention of the grant of the patent: **29.01.2003**
(21) Application number: 97202010.1
(22) Date of filing: 02.07.1997
(51) Int. Cl.: B01D 46/52, F24F 3/16

(54) **Filter unit**
Filtereinrichtung
Installation de filtrage

(30) Priority: 04.07.1996 JP 17497296
(43) Date of publication of application: 07.01.1998
(73) Proprietor: Shikoku Kakoki Co., Ltd., Itano-gun Tokushima (JP)
(72) Inventor: Iwano, Fumiyuki, c/o Shikoku Kakoki Co., Ltd., Itano-gun, Tokushima (JP); Yoshida, Kiyomi, c/o Shikoku Kakoki Co., Ltd., Itano-gun, Tokushima (JP); Ueda, Michio, c/o Shikoku Kakoki Co., Ltd., Itano-gun, Tokushima (JP)
(74) Representative: Vollebregt, Cornelis Jacobus, Ir.

(56) References cited:
- EP-A- 0 711 961
- US-A- 3 760 568
- US-A- 4 269 615

## Description

### BACKGROUND OF THE INVENTION

The present invention relates to filter units, and more particularly to filter units according to the pre-characterising part of claim 1 useful, for example, for the clean room to be installed in pharmaceutical plants, food plants, etc. and for the air cleaning device to be installed in aseptic filling-packaging machines.

Filter units heretofore in use comprise a plurality of filters arranged in series and all held between an inlet duct having an outer flange and an outlet duct having an outer flange. The flange of the inlet duct and the flange of the outlet duct are fastened together by fastening means, whereby all the filters are fixed in position.

When the ducts are released from the fastening means, the filters of the conventional filter unit are all separated from one another. Generally with filter units, the filter at the inlet end is more susceptible to contamination than the other filters and therefore needs to be replaced frequently, whereas if all the filters become separated individually, some of the other filters are likely to slip off, so that the other filters must be prevented from slipping off by some means when the inlet-end filter is to be replaced. Thus, the conventional filter unit has the problem that the replacement procedure requires time and labor and is cumbersome.

Further from US-A-3.760.568 there is known a filter unit according the pre-characterizing part of claim 1. Thereby the intermediate duct has been mounted at the end of a further duct. In a wall of said further duct there has been provided apertures for mounting further filter one besides the other.

### SUMMARY OF THE INVENTION

An object of the present invention is to overcome the above problem and to provide a filter unit having a filter at the inlet end thereof which filter can be replaced easily.

The present invention provides a filter unit wherein the filters other than the filter at the inlet end are held between the intermediate duct and an outlet duct having an outer flange, and the outer flange of the intermediate duct and the outer flange of the outlet duct are fastened together by further fastening means, whereby the filters other than the filter at the inlet end are fixed in position.

With the filter unit of the present invention, the filter at the inlet end can be separated off singly when the flange of the inlet duct and the flange of the intermediate duct are unfastened. Accordingly, the inlet-end filter which needs to be replaced frequently can be replaced by a new one readily. When the inlet-end filter only is to be replaced, the other filters are not separated from one another in this case, consequently facilitating the replacement of the inlet-end filter.

Preferably, each of the fastening means of the filter unit comprises a tie rod extending through the outer flanges of the inlet duct and the intermediate duct, and the tie rod is provided with a stopper at an end portion thereof toward the intermediate duct for preventing the tie rod from slipping off toward the inlet duct, the tie rod being externally threaded over a predetermined length of an end portion thereof toward the inlet duct, a fastening nut being screwed on the externally threaded portion at a part thereof projecting upstream beyond the outer flange of the inlet duct with springs provided between the nut and the inlet duct flange. In this case, the inlet duct flange and the intermediate duct flange can be fastened together and unfastened easily. While a gasket is interposed between the inlet-end filter and each of the inlet duct and the intermediate duct, a clearance is prevented from occurring even if the gasket deteriorates since the flanges of these ducts are biased toward each other by the force of the springs.

Preferably, a nut for lifting the inlet duct is screwed on the externally threaded portion of the tie rod at one side of the inlet duot flange opposite to the fastening nut. When the lifting nut is rotated and thereby moved toward the end of the tie rod positioned toward the inlet duct, with the fastening nut of the fastening means loosened or removed, the flange of the inlet duct can be lifted to move the inlet duct away from the inlet-end filter. The inlet-end filter can therefore be replaced with greater ease.

Preferably, the filter unit comprises means for positioning the intermediate duct and all the filters in place with respect to three directions thereof as seen from above, and means for preventing displacement of the intermediate duct and all the filters toward the remaining one direction is removably provided between the outer flange of the inlet duct and the outer flange of the outlet duct. In this case, the intermediate duct and all the filters can be readily positioned in place with respect to the three directions mentioned, and can also be prevented from being displaced toward the remaining one direction. The displacement preventing means is removed when the inlet-end filter is to be replaced, and is therefore unlikely to become an obstacle to the replacement.

The means for preventing displacement of the intermediate duct and all the filters toward the remaining one direction comprises a rod extending from the inlet duct flange and the outlet duct flange, the rod of the displacement preventing means having one end removably fixed to the outlet duct flange and the other end inserted through an inwardly enlarged cutout formed in the inlet duct flange, the other end of the rod having a constricted part formed at a position axially away from the inlet duct flange and having a width smaller than the distance between inlet edges defining the cutout.

The present invention will be described in greater detail with reference to the accompanying drawings.

### BRIEF DESCRIPTION OF THE DRAWINGS

FIG. 1 is a diagram showing the components of a packaging machine for performing some steps of the entire process to be practiced by the machine, i.e., for forming a web into a tube, filling contents into the tube and forming the tube into containers;
FIG. 2 is an exploded perspective view of a filter unit embodying the invention;
FIG. 3 is a side elevation of the filter unit;
FIG. 4 is an enlarged view in section taken along the line IV-IV in FIG. 3;
FIG. 5 is an enlarged fragmentary view of FIG. 3;
FIG. 6 is a view in section taken along the line VI-VI in FIG. 5;
FIG. 7 is a view of a portion of the unit as it is seen in the direction of the arrow line VII-VII in FIG. 5; and
FIG. 8 is a view in vertical section schematically showing the construction of the filter unit of the invention, with fastening means shifted.

### DESCRIPTION OF THE PREFERRED EMBODIMENT

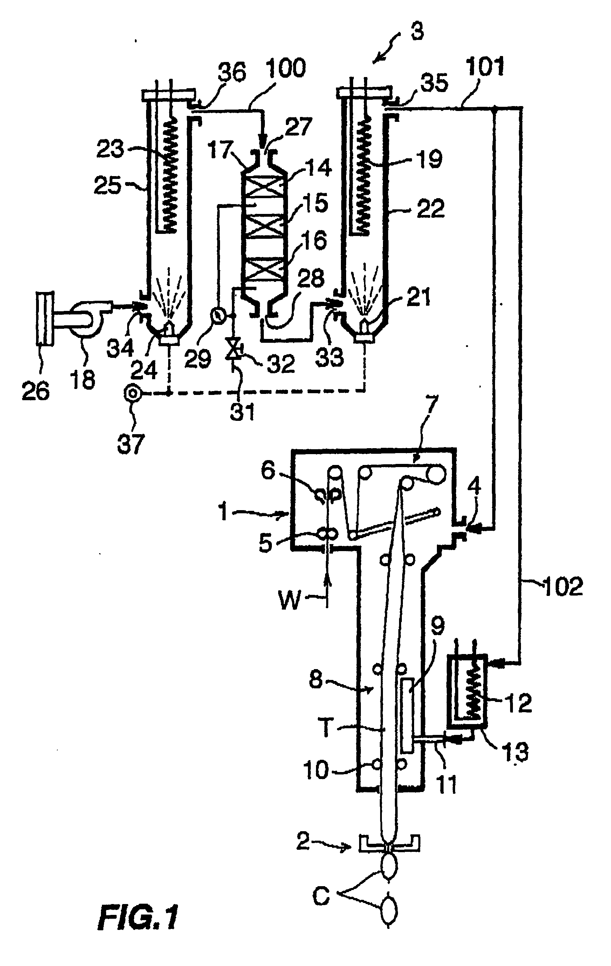

FIG. 1 shows devices included in a packaging machine for use in forming a web W into a tube T, filling the tube with contents and forming the filled tube into pillow-shaped containers C. These devices are an aseptic chamber 1, a container forming device 2 disposed below the chamber 1, and a device 3 for supplying clean air into the aseptic chamber 1.

The aseptic chamber 1 has at an upper portion thereof an inlet 4 for a sterilising fluid and clean air. Arranged within the chamber 1 are squeeze rollers 5 (antiseptic solution removing rollers), air knives 6 (hot air nozzles for blowing away the antiseptic solution), web guide means 7 including rollers for guiding the web W through the chamber 1, a tube forming device 8 for making a portion of the web W into a tubular form with opposite edges thereof lapping over each other while the web travels downward from above within the chamber 1 and sealing the lap to obtain the tube T, and a device (not shown) for filling the tube T with contents.

The container forming device 2 withdraws the content-filled tube T from the aseptic chamber 1 downward, transporting the withdrawn tube T downward by a length corresponding to one container at a time and transversely sealing and cutting the tube to form a pillow-shaped container C every time the tube is thus transported.

The tube forming device 8 comprises a hot air nozzle 9 which is vertically elongated for heating the lapping edges of the web W, and a sealing unit 10 comprising a plurality of rollers disposed below the nozzle 9. The nozzle 9 has a hot air inlet 11 connected to an air heating chamber 13 which has a heater 12 housed therein.

The clean air supply device 3 comprises a filter unit 17 including an inlet filter 14, intermediate HEPA filter 15 and outlet HEPA filter 16 arranged in series for filtering and thereby cleaning the air to be supplied to the aseptic chamber 1, a blower 18 for sending air into the filter unit 17 through an air supply pipe 100, a heating-sterilizing tank 22 provided at an intermediate portion of a clean air supply pipe 101 for heating the clean air and also for sterilizing the aseptic chamber 1, the pipe 101 interconnecting the filter unit 17 and the chamber 1, and a filter unit sterilizing tank 25 provided at an intermediate portion of the air supply pipe 100 connecting the blower 18 to the filter unit 17. The heating-sterilizing tank 22 has a nozzle 21 (antiseptic nozzle) opposed to the interior of the tank 22 for spraying an aqueous solution of hydrogen peroxide, and a heater 19 disposed in the interior of the tank 22. The filter unit sterilizing tank 25 has a nozzle 24 (antiseptic nozzle) opposed to the interior of the tank 25 for spraying an aqueous solution of hydrogen peroxide, and a heater 23 disposed in the interior of the tank 25. The clean air supply device 3 is also adapted to sterilize the interior of the aseptic chamber 1 when a packaging operation is to be initiated.

A filter 26 is attached to the air inlet of the blower 18. The filter unit 17 has an inlet 27 at its upper end and an outlet 28 at its lower end. The filter unit 17 further has a differential pressure gauge 29 for measuring the pressure difference between the upstream side of the intermediate HEPA filter 15 and the downstream side of the outlet HEPA filter 16. Branching from the piping for the gauge 29 is a sterilizing fluid discharge pipe 31, which is provided with an on-off valve 32. Each of the tanks 22, 25 has an inlet 33 (34) at the lower end of its peripheral wall and an outlet 35 (36) at the upper end thereof. The outlet of the blower 18 is connected to the inlet 34 of the filter unit sterilizing tank 25, the outlet 36 of the tank 25 to the inlet 27 of the filter unit 17, the outlet 28 of the filter unit 17 to the inlet 33 of the heating-sterilizing tank 22, and the outlet 35 of the tank 22 to the inlet 4 of the aseptic chamber 1. At a position downstream from the tank 22, the clean air supply pipe 101 branches off into a branch pipe 102 having a lower end connected to the heating chamber 13. The nozzles 21, 24 of the tanks 22, 25 are attached to the lower ends of the respective tanks 22, 25, as directed upward, and are connected to a source 37 for supplying the aqueous solution of hydrogen peroxide.

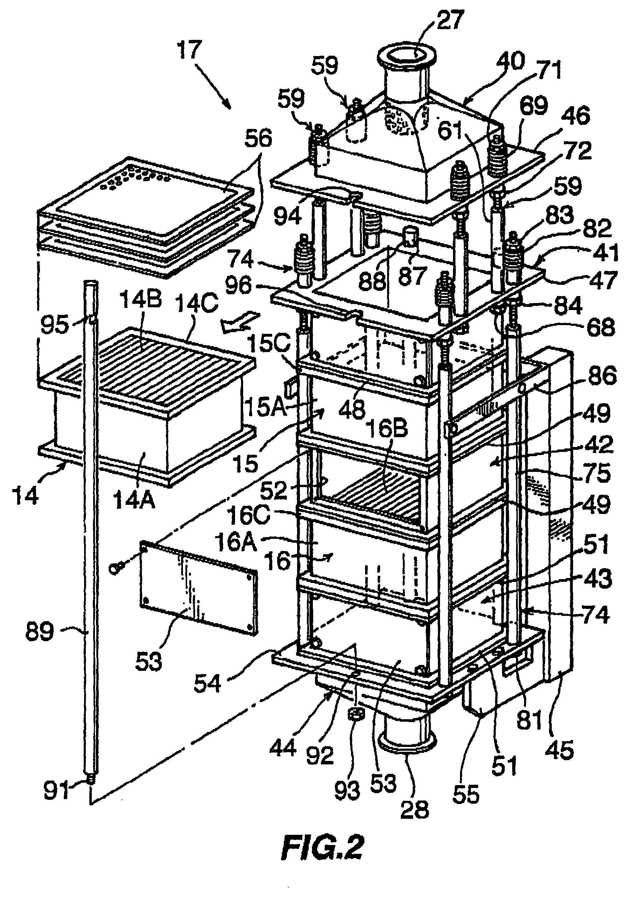

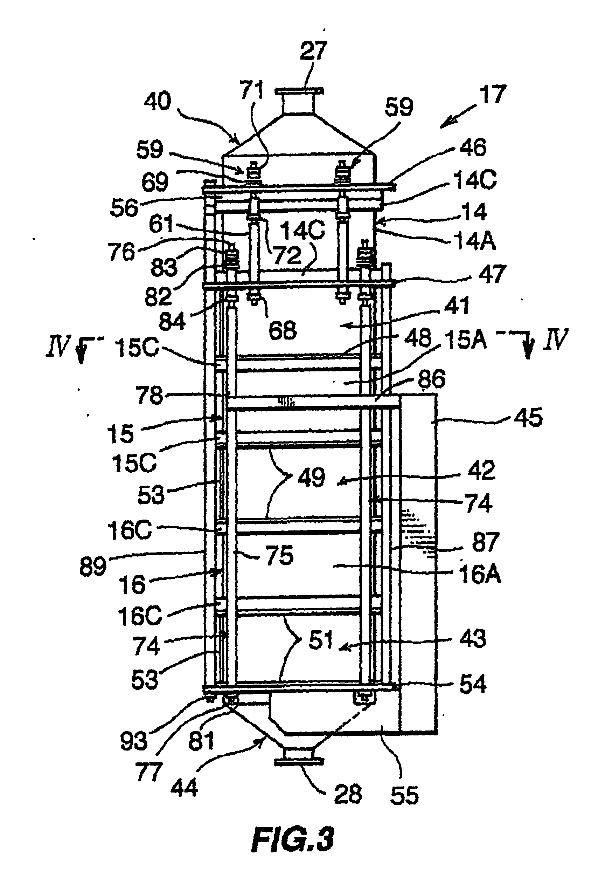

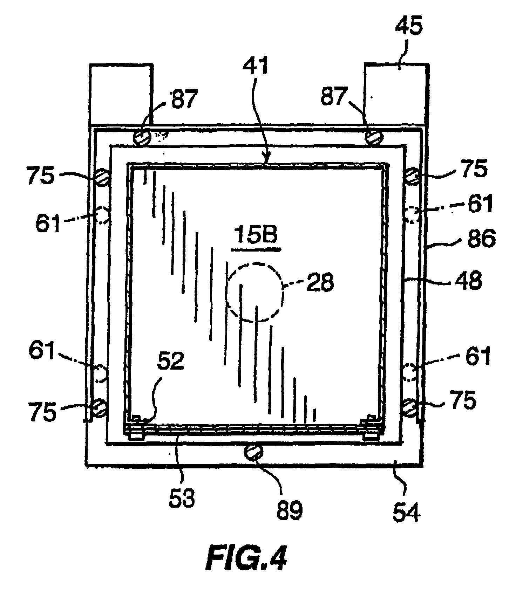

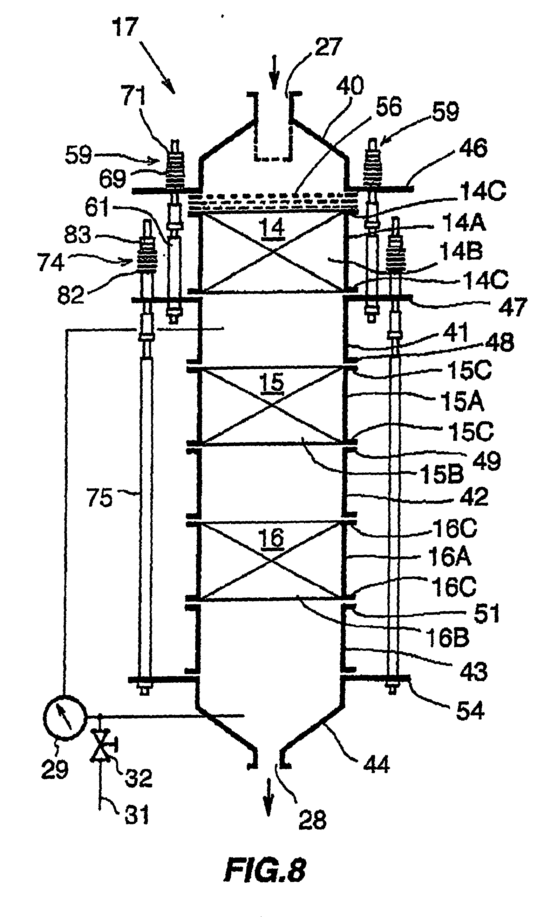

FIGS. 2 to 8 show the construction of the filter unit 17 in detail. In the following description, the left-hand side of FIG. 3 will be referred to as the "front," the opposite side thereof as the "rear," and the left-hand side and the right-hand side of FIG. 4 as "left" and "right," respectively.

With reference to FIGS. 2 to 8, the filter unit 17 comprises an inlet duct 40, inlet filter 14 (inlet-end filter), first intermediate duct 41, intermediate HEPA filter 15, second intermediate duct 42, outlet HEPA filter 16, third intermediate duct 43 and outlet duct 44 which are arranged in layers as aligned vertically and are secured to a frame 45.

The inlet duct 40 has a lower portion in the form of a square tube, an upper portion constricted as it extends upward, and an upper end portion providing the inlet 27 of the filter unit 17. The inlet duct 40 is integral with an outer flange 46 at its lower end.

The three intermediate ducts 41, 42, 43 are each in the form of a square tube having the same cross sectional area as the square tube portion of the inlet duct 40. The first intermediate duct 41 is integrally formed at its upper end with an outer flange 47 having the same size as the outer flange 46 of the inlet duct 40. The lower end of the first intermediate duct 41, end the upper and lower ends of the second and third intermediate ducts 42, 43 are integrally formed with outer flanges 48, 49, 51 which are much smaller than the outer flange 46 of the inlet duct 40. An inspection opening 52 is formed in the front side wall of each of the intermediate ducts 41, 42, 43 and normally closed with a lid 53 fastened to the wall with screws.

The outlet duct 44 has an upper portion in the form of a square tube having the same cross sectional area as the square tube portion of the inlet duct 40, a lower portion constricted as it extends downward, and a lower end portion providing the outlet 28 of the filter unit 17. The outlet duct 44 is integrally formed at its upper end with an outer flange 54 having the same size as the outer flange 46 of the inlet duct 40. The outer flange 54 of the outlet duct 44 is removably fixed to a pair of right and left support members 55 at the lower end of the frame 45 as with screws.

Each of the filters 14, 15, 16 comprises a frame 14A (15A, 16A) in the form of square tube having the same cross sectional area as the square tube portion of the inlet duct 40, and a filter material 14B (15B, 16B) provided inside the frame 14A (15A, 16A). The frame 14A (15A, 16A) is integrally formed at its upper and lower ends with outer flanges 14C (15C, 16C) having the same size as the small outer flange 48 at the lower end of the first intermediate duct 41.

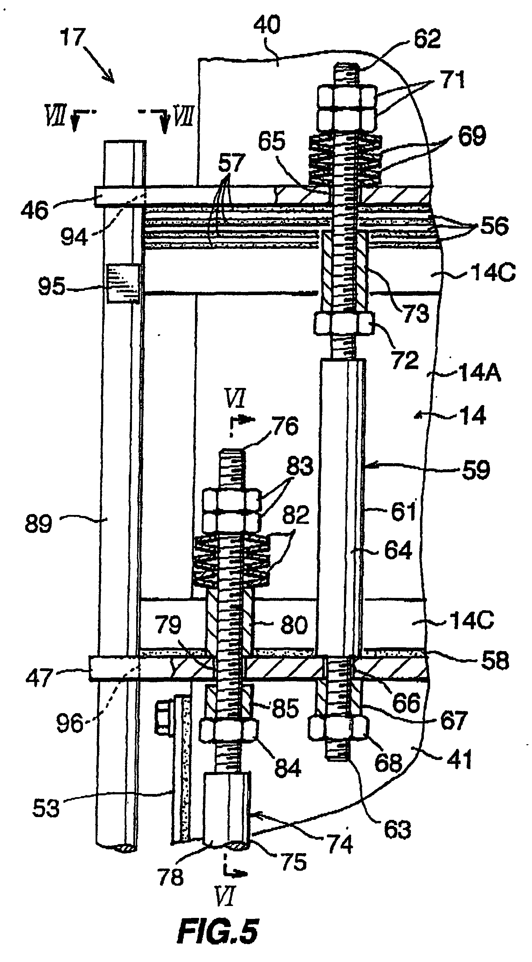

Flow adjusting plates 56 are interposed between the outer flange 46 of the inlet duct 40 and the upper-end outer flange 14C of the inlet filter 14. As shown in detail in FIG. 5, a gasket 57 is interposed between the flange 46 and the plate 56 adjacent thereto and between the flange 14C and the plate 56 adjacent thereto, at the peripheral edges thereof, and also between the peripheral edges of each two adjacent flow adjusting plates 56. A gasket 58 is also provided between each adjacent pair of the flanges 14C, 15C, 16C, 47, 48, 49, 51 of the filters 14, 15, 16 and the intermediate ducts 41, 42, 43, and between the adjacent flanges 51, 54 of the third intermediate duct 43 and the outlet duct 44.

The outer flange 46 of the inlet duct 40 and the upper-end outer flange 47 of the first intermediate duct 41 are fastened together at each of the right and left sides by a pair of front and rear fastening means 59, whereby the inlet filter 14 is fixed in position. Each fastening means 59 has a tie rod 61 extending through the outer flanges 46, 47 of the inlet duct 40 and the first intermediate duct 41.

As illustrated in FIG. 5 in detail, the tie rod 61 has upper and lower externally threaded end portions, i.e., screw portions 62, 63. The upper portion 62 is longer than the lower portion 63. Between the screw portions 62, 63, the tie rod 61 has a large-diameter portion 64 having a larger diameter than these portions 62, 63. The upper screw portion 62 is inserted through a hole 65 formed in the outer flange 64 of the inlet duct 40, and the lower screw portion 63 through a hole 66 formed in the outer flange 47 of the first intermediate duct 41. A sleeve 67 is fitted around the lower screw portion 63, and a nut 68 is fitted to the screw portion 63 from below the sleeve 67 and tightened up. The sleeve 67 and the nut 68 serve as a stopper for preventing the tie rod 61 from slipping off upward. The outer flange 47 is held between the lower end face of the large-diameter portion 64 of the tie rod 61 and the upper end face of the sleeve 67, whereby the lower end of the tie rod 61 is secured to the flange 47.

The flange 46 of the inlet duct 40 is positioned at a level corresponding to an intermediate portion of the length of the upper screw portion 62. A plurality of disk springs 69 are fitted around the part of the upper screw portion 62 of the tie rod 61 projecting upward beyond the flange 46, and two fastening nuts 71 are screwed on the portion 62 from above the springs and tightened up. The springs 69 preclude a clearance from occurring when the gaskets 57 between the inlet duct 40 and the inlet filter 14 and the gasket 58 between the inlet filter 14 and the first intermediate duct 41 deteriorate. A nut 72 for lifting the inlet duct 40 is screwed on the part of the upper screw porion 62 of the tie rod 61 below the flange 46. A sleeve 73 is fitted around the part of the upper screw portion 62 between the flange 46 and the nut 72. The tie rods 61 of the right and left fastening means 59 are in contact with respective right and left side portions of the lower-end outer flange 14C of the inlet filter 14, whereby the filter 14 is positioned in place with respect to the right-to-left direction.

The upper-end outer flange 47 of the first intermediate duct 41 and the outer flange 54 of the outlet duct 44 are fastened together at each of the right and left sides by a pair of front and rear fastening means 74, whereby the intermediate and outlet HEPA filters 15, 16 and the second and third intermediate ducts 42, 43 are fixed in position. Each fastening means 74 has a tie rod 75 extending through the flanges 47, 54 of the first intermediate duct 41 and the outlet duct 44. The tie rods 75 are positioned to the front and rear of the respective tie rods 61 of the fastening means 59 for fixing the inlet filter 14.

The tie rod 75 has upper and lower externally threaded end portions, i.e., screw portions 76, 77. The upper portion 76 is longer than the lower portion 77. Between the screw portions 76, 77, the tie rod 75 has a large-diameter portion 78 having a larger diameter than these portions 76, 77. The lower screw portion 77 is inserted through a hole (not shown) formed in the outer flange 54 of the outlet duct 44. A fastening nut 81 is screwed and tightened up on the lower end of the lower screw portion 77. The nut 81 serves as a stopper for preventing the tie rod 75 from slipping off upward. The outer flange 54 is held between the lower end face of the large-diameter portion 78 of the tie rod 75 and the nut 81, whereby the lower and portion of the rod 75 is secured to the flange 54.

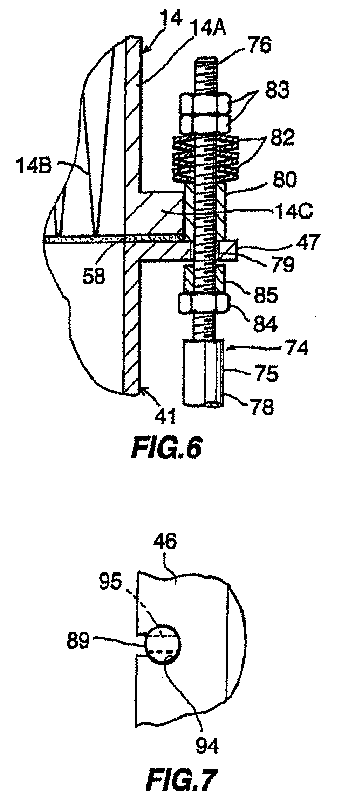

As shown in detail in FIGS. 5 and 6, the upper screw portion 76 is inserted through a hole 79 formed in the outer flange 47 of the first intermediate duct 41. This flange 47 is positioned at a level corresponding to an intermediate portion of the length of the upper screw portion 76. A sleeve 80 having a length greater than the thickness of the outer flange 14C of the inlet filter 14 is fitted around the part of the upper screw portion 76 projecting upward beyond the flange 47, a plurality of disk springs 82 are fitted to the screw portion 76 from above the sleeve 80, and two fastening nuts 83 are screwed on the portion 76 from above the springs and tightened up. The disk springs 82 preclude a clearance from occurring in the event of deterioration of the gaskets 58 between the first intermediate duct 41 and the intermediate HEPA filter 15, between the filter 15 and the second intermediate duct 42, between the duct 42 and the outlet HEPA filter 16, between the filter 16 and the third intermediate duct 43, and between the duct 43 and the outlet duot 44. A nut 84 for lifting the first intermediate duct 41 is screwed on the part of the upper screw portion 76 of the tie rod 75 below the flange 47. A sleeve 85 is fitted around the part of the screw portion 76 between the flange 47 and the nut 84.

As seen in FIG. 4, the tie rods 75 of the right and left fastening means 74 are in contact with right and left side portions of the flanges 15C, 16C, 48, 49, 51 of the intermediate and outlet HEPA filters 15, 16 and all the intermediate ducts 41, 42, 43, whereby these components are positioned in place with respect to the right-to-left direction. The right and left tie rods 75 are removably fixed to respective right and left arms 86 at the upper end of the frame 45 as with screws.

All the filters 14, 15, 16 and the intermediate ducts 41, 42, 43 are positioned in place with respect to the rearward direction by the contact of rear edge portions of the outer flanges 14C, 15C, 16C, 48, 49, 51 with a pair of right and left vertical positioning rods 87 each having a lower end fixed to a rear portion of the flange 54 of the outlet duct 44 and an upper end inserted through a hole 88 formed in a rear portion of the upper-end outer flange 47 of the first intermediate duct 41.

A vertical rod 89 for preventing the forward displacement of all the filters 14, 15, 16 and the intermediate ducts 41, 42, 43 removably extends from e front portion of the flange 46 of the inlet duct 40 to a front portion of the flange 54 of the outlet duct 44. The vertical rod 89 has a small-diameter screw portion 91 extending downward from a stepped lower end portion thereof and inserted through a hole 92 formed in the outer flange 54 of the outlet duct 44. A fastening nut 93 is screwed on the screw portion 91 from below and tightened up to hold the flange 54 between the stepped portion and the nut 93, whereby the lower end portion of the rod 89 is removably fixed to the flange 54. The rod 89 has an upper end portion inserted through an inwardly enlarged cutout 94 formed in the flange 46 of the inlet duct 40. The rod upper end portion is constricted as at 95 at a part thereof positioned slightly below the flange 46 of the inlet duct 40. As seen in FIG. 7, the width of the constricted part 95 is smaller than the distance between inlet edges defining the cutout 94. The vertical rod 89 is fitted in a cutout 96 formed in the upper-end outer flange 47 of the first intermediate duct 41.

When the packaging machine is to be initiated into a packaging operation, the heaters 19, 23 of the two tanks 22, 25 are held out of operation in advance, with the nozzle 24 of the filter unit sterilizing tank 25 also held out of operation. The valve 32 of the filter unit 17 is held closed. The outlet 35 of the heating-sterilizing tank 22 is held out of communication with the heating chamber 13.

In this state, air is sent into the filter unit 17 via the tank 25 by the blower 18, cleaned by being separated from extraneous matter by the filters 14, 15, 16 and thereafter supplied to the tank 22. At the same time, en aqueous solution of hydrogen peroxide is sprayed from the nozzle 21 of the tank 22. The solution sprayed is sent out from the outlet 35 along with the clean air, led into the aseptic chamber 1 through the inlet 4 and applied to the inner walls of the chamber 1 and to the surfaces of various devices within the chamber 1. The nozzle 21 is then brought out of operation, whereupon the heater 19 is actuated to heat the clean air supplied to the tank 22. The hot clean air is introduced into the aseptic chamber 1 via the inlet 4, evaporating the solution of hydrogen peroxide to sterilize the inner walls of the chamber 1 and the devices therein.

During the packaging operation, the nozzles 21, 24 are held out of operation, and the clean air sent into the heating-sterilizing tank 22 by way of the sterilizing tank 25 and the filter unit 17 is heated by the heater 19, whereby hot clean air only is supplied to the aseptic chamber 1 to give a positive pressure to the interior of the chamber 1 and to preclude inflow of outside air. At the same time, the hot clean air is sent into the heating chamber 13, in which the air is further heated, and the air is supplied to the sealing unit 9.

When the pressure difference as detected by the differential pressure gauge has increased to twice the initial pressure difference, or when the packaging machine has been operated for a predetermined period of time, e.g., for 2000 hours, the packaging machine is brought out of operation, and the filters 14, 15, 16 in the filter unit 17 are replaced. Since the inlet filter 14 is more susceptible to contamination than the other filters 15, 16, the filter 14 alone needs to be replaced frequently even before the above condition is mat, in conformity with other suitable condition. After the replacement of the filters 14, 15, 16 by new ones, the aqueous solution of hydrogen peroxide is sprayed into the tank 25 from the nozzle 24, converted to a gaseous state by heating with the heater 23 and then sent into the filter unit 17 with the air forced into the tank 25 by the blower 18, whereby the new filters 14, 15, 16 are sterilized. During this operation, the flow of fluid from the filter unit 17 into the heating-sterilizing tank 22 is halted while allowing the solution-containing air and hot air to flow out through the discharge pipe 31 and the valve 32 which is opened.

When only the inlet filter 14 of the filter unit 17 is to be replaced, the fastening nut 93 is first removed from the lower-end screw portion 91 of the vertical rod 89, the rod 89 is raised to withdraw the screw portion 91 from the hole 92 and to position the constricted part 95 at the level of the inwardly enlarged cutout 94, and the constricted part 95 is forwardly withdrawn from the cutout 94 through the inlet opening of the cutout, whereby the rod 89 is removed. Subsequently, the two fastening nuts 71 of each fastening means 59 are loosened or removed, the inlet duct lifting nut 72 of each means 59 is rotated and thereby raised, causing the sleeve 73 to lift the outer flange 46 of the inlet duct 40. In this state, the inlet filter 14 is drawn forward. With the outer flange 46 lifted by the sleeves 73, this procedure can be performed free of trouble despite the presence of the flow adjusting plates 56. A new inlet filter 14 is then pushed into the space between the inlet duct 40 and the first intermediate duct 41 while the right and left side edges of the lower-end outer flange 14 are being guided by the tie rods 61 of the right and left fastening means 59 to bring the rear edge of the flange 14C into contact with the vertical positioning rod 87. The fastening nuts 71 of the fastening means 59 are then tightened up, causing the inlet duct 40 and the first intermediate duct 41 to fix the inlet filter 14 in position. The vertical rod 89 is thereafter installed in place by a procedure reverse to the procedure described. In this way, the inlet filter 14 is replaced by the new one.

When the intermediate and outlet HEPA filters 15, 16 are to be replaced, the vertical rod 89 is first removed in the same manner as when the inlet filter 14 only is to be replaced. The two fastening nuts 83 of each fastening means 74 are then loosened or removed, the first intermediate duct lifting nut 84 of each means 74 is rotated and raised to cause the sleeve 85 to lift the upper-end outer flange 47 of the first intermediate duct 41, and the filters 15, 16 are withdrawn forward in this state. Subsequently, a new intermediate HEPA filter 15 is pushed into the space between the first and second intermediate ducts 41, 42, and a new outlet HEPA filter 16 into the space between the second and third intermediate ducts 42, 43 while causing the tie rods 75 of the right and left fastening means 74 to guide the right and left side edges of the outer flanges 15C, 16C, bringing the rear edges of the flanges 15C, 16C into contact with the vertical positioning rod 87. The fastening nuts 83 of the fastening means 74 are then tightened up, causing the first intermediate duct 41 and the outlet duct 44 to fix the new intermediate and outlet HEPA filters 15, 16 in position. The vertical rod 89 is thereafter installed by a procedure reverse to that described above. In this way, the intermediate and outlet HEPA filters 15, 16 are replaced by the new filters.

## Claims

1. A filter unit comprising a plurality of filters (14-16) arranged in series, the filter (14) at an inlet end being held between an inlet duct (40) having an outer flange (46) and an intermediate duct (41) having an outer flange (47), the outer flange(46) of the inlet duct (40) and the outer flange (47) of the intermediate duct (41) being fastened together by fastening means (59) whereby the filter at the inlet end is fixed in position, **characterised in that** the filters (15, 16) other than the filter (14) at the inlet end are held between the intermediate duct (41) and an outlet duct (44) having an outer flange (54), and the outer flange (47) of the intermediate duct (41) and the outer flange (54) of the outlet duct (44) are fastened together by further fastening means (74), whereby the filters (15, 16) other than the filter (14) at the inlet end are fixed in position.

2. A filter unit as defined in claim 1 wherein the fastening means (59) comprises a tie rod (61) extending through the outer flanges (46, 47) of the inlet duct (40) and the intermediate duct (41), and the tie rod (61) is provided with a stopper (67, 68) at an end portion thereof toward the intermediate duct (41) for preventing the tie rod (61) from slipping off toward the inlet duct (40) the tie rod (61) being externally threaded over a predetermined length of an end portion (62) thereof toward the inlet duct (40), a fastening nut (71) being screwed on the externally threaded portion (62) at a part thereof projecting upstream beyond the outer flange (46) of the inlet duct (40) with springs (69) provided between the nut (71) and the inlet duct flange (46).

3. A filter unit as defined in claim 2 wherein a nut (72) for lifting the inlet duct (40) is screwed on the externally threaded portion (62) of the tie rod (61) at one side of the inlet duct flange (46) opposite to the fastening nut (71).

4. A filter unit as defined in any one of claims 1 to 3 which comprises means (75, 87) for positioning the intermediate duct (41) and all the filters (14-16) in place with respect to three directions thereof as seen from above, and means (89) for preventing displacement of the intermediate duct (41) and all the filters (14-16) toward the remaining one direction is removably provided between the outer flange (46) of the inlet duct (40) and the outer flange (54) of the outlet duct (44).

5. A filter unit as defined in claim 4 wherein the means for preventing displacement of the intermediate duct (41) and all the filters (14-16) toward the remaining one direction comprises a rod (89) extending between the inlet duct flange (46) and the outlet duct flange (54), the rod (89) of the displacement preventing means having one end (91) removably fixed to the outlet duct flange (54) and the other end inserted through an inwardly enlarged cutout (94) formed in the inlet duct flange (46), said other end of the rod (89) having a constricted part (95) formed at a position axially away from the inlet duct flange (46) and having a width smaller than the distance between inlet edges defining the cutout (94).

6. A packaging machine comprising a filter unit comprising a plurality of filters (14-16) arranged in series, the filter (14) at an inlet end being held between an inlet duct (40) having an outer flange (46) and an intermediate duct (41) having an outer flange (47), the outer flange (46) of the inlet duct (40) and the outer flange (47) of the intermediate duct (41) being fastened together by fastening means (59), whereby the filter at the inlet end is fixed in position, wherein the filters (15,16) other than the filter (14) at the inlet end are held between the intermediate duct (41) and an outlet duct (44) having an outer flange (54), and the outer flange (47) of the intermediate duct (41) and the outer flange (54) of the outlet duct (44) are fastened together by further fastening means (74), whereby the filters (15, 16) other than the filter (14) at the inlet end are fixed in position.

## Patentansprüche

1. Eine Filtereinheit mit einer Mehrzahl von Filtern (14 - 16), die in Reihe angeordnet sind, wobei der Filter (14) an dem Einlaßende zwischen einer Einlaßleitung (40) mit einem Außenflansch (46) und einer Zwischenleitung (41) mit einem Außenflansch (47) gehalten wird, wobei der Außenflansch (46) der Einlaßleitung (40) und der Außenflansch (47) der Zwischenleitung (41) durch Befestigungsmittel (59) miteinander verbunden sind, wodurch der Filter an dem Einlaßende an Ort und Stelle fixiert wird, **dadurch gekennzeichnet, daß** die neben dem Filter (14) an dem Einlaßende vorgesehenen weiteren Filter (15, 16) zwischen der Zwischenleitung (41) und einer Auslaßleitung (44) mit einem Außenflansch (54) gehalten sind und der Außenflansch (47) der Zwischenleitung (41) und der Außenflansch (54) der Auslaßleitung (44) durch weitere Befestigungsmittel (74) miteinander verbunden sind, wodurch die neben dem Filter (14) an dem Einlaßende vorgesehenen Filter (15, 16) an Ort und Stelle fixiert werden.

2. Eine Filtereinheit wie in Anspruch 1 definiert, **dadurch gekennzeichnet, daß** das Befestigungsmittel (59) eine Verbindungsstange (61) aufweist, die sich durch die Außenflansche (46, 47) der Einlaßleitung (40) und der Zwischenleitung (41) erstreckt, und die Verbindungsstange (61) mit einem Anschlag (67, 68) an ihrem zur Zwischenleitung (41) weisenden Endbereich versehen ist, um zu verhindern, daß die Verbindungsstange (61) in Richtung der Einlaßleitung (40) abrutscht, wobei die Verbindungsstange (61) über eine vorgegebene Strecke eines zur Einlaßleitung (40) gerichteten Endbereiches (62) von ihr mit einem Außengewinde versehen ist, eine Befestigungsmutter (71) auf den Außengewindebereich (62) an einem Teil davon, der stromaufwärts über den Außenflansch (46) der Einlaßleitung (40) vorsteht, aufgeschraubt ist, und Federn (69) zwischen der Mutter (71) und dem Einlaßleitungsflansch (46) vorgesehen sind.

3. Eine Filtereinheit wie in Anspruch 2 definiert, **dadurch gekennzeichnet, daß** eine Mutter (72) zum Anheben der Einlaßleitung (40) auf den Außengewindebereich (62) der Verbindungsstange (61) auf einer Seite des Einlaßleitungsflansches (46), welcher der Befestigungsmutter (71) gegenüberliegt, aufgeschraubt ist.

4. Eine Filtereinheit wie in einem der Ansprüche 1 bis 3 definiert, die Mittel (75, 87) aufweist, um die Zwischenleitung (41) und alle Filter (14 - 16) bezüglich ihrer drei Richtungen, wenn sie von oben betrachtet werden, zu positionieren, und ein Mittel (89) zur Verhinderung einer Verstellung der Zwischenleitung (41) und der Filter (14 - 16) in der verbleibenden einen Richtung lösbar zwischen dem Außenflansch (46) der Einlaßleitung (40) und dem Außenflansch (54) der Auslaßleitung (44) vorgesehen ist.

5. Eine Filtereinheit wie in Anspruch 4 definiert, **dadurch gekennzeichnet, daß** das Mittel zur Verhinderung einer Verstellung der Zwischenleitung (41) und der Filter (14 - 16) in der verbleibenden einen Richtung eine Stange (89) umfaßt, die sich zwischen dem Einlaßleitungsflansch (46) und dem Auslaßleitungsflansch (54) erstreckt, wobei die Stange (89) des Verstellungsverhinderungsmittels ein Ende (91) hat, das lösbar an dem Auslaßleitungsflansch (54) fixiert ist, und das andere Ende durch einen nach innen vergrößerten Ausschnitt (94), der in dem Einlaßleitungsflansch (46) ausgebildet ist, befestigt ist, wobei das andere Ende der Stange (89) einen verengten Teil (95) hat, der an einer Position axial weg von dem Einlaßleitungsflansch (46) ausgebildet ist und eine Breite hat, die kleiner als die Strecke zwischen den Einlaßkanten, welche den Ausschnitt (94) definieren, ist.

6. Eine Verpackungsmaschine mit einer Filtereinheit mit einer Mehrzahl von Filtern (14 - 16), die in Reihe angeordnet sind, wobei der Filter (14) an dem Einlaßende zwischen einer Einlaßleitung (40) mit einem Außenflansch (46) und einer Zwischenleitung (41) mit einem Außenflansch (47) gehalten ist, wobei der Außenflansch (46) der Einlaßleitung (40) und der Außenflansch (47) der Zwischenleitung (41) durch Befestigungsmittel (59) miteinander verbunden sind, wodurch der Filter an dem Einlaßende in Position fixiert ist, wobei die neben dem Filter (14) an dem Einlaßende vorgesehenen weiteren Filter (15, 16) zwischen der Zwischenleitung (41) und einer Auslaßleitung (44) mit einem Außenflansch (54) gehalten sind und der Außenflansch (47) der Zwischenleitung (41) und der Außenflansch (54) der Auslaßleitung (44) miteinander durch weitere Befestigungsmittel (74) verbunden sind, wodurch die neben dem Filter (14) an dem Einlaßende vorgesehenen weiteren Filter (15, 16) an Ort und Stelle fixiert werden.

## Revendications

1. Unité de filtrage comprenant plusieurs filtres (14-16) montés en série, le filtre (14) situé au niveau d'une extrémité d'entrée étant maintenu entre un conduit d'entrée (40) muni d'un rebord extérieur (46) et un conduit intermédiaire (41) muni d'un rebord extérieur (47), le rebord extérieur (46) du conduit d'entrée (40) et le rebord extérieur (47) du conduit intermédiaire (41) étant fixés l'un à l'autre par des moyens de fixation (59), pour qu'ainsi le filtre situé au niveau de l'extrémité d'entrée soit immobilisé en place, **caractérisée en ce que** les filtres (15, 16) autres que le filtre (14) situé au niveau de l'extrémité d'entrée sont maintenus entre le conduit intermédiaire (41) et un conduit de sortie (44) muni d'un rebord extérieur (54), et **en ce que** le rebord extérieur (47) du conduit intermédiaire (41) et le rebord extérieur (54) du conduit de sortie (44) sont fixés l'un à l'autre par d'autres moyens de fixation (74), pour qu'ainsi les filtres (15, 16) autres que le filtre (14) situé au niveau de l'extrémité d'entrée soient immobilisés en place.

2. Unité de filtrage telle que définie dans la revendication 1, dans laquelle les moyens de fixation (59) comprennent une tige de raccordement (61) qui s'étend à travers les rebords extérieurs (46, 47) du conduit d'entrée (40) et du conduit intermédiaire (41), tige de raccordement (61) qui est pourvue, au niveau de sa partie d'extrémité située vers le conduit intermédiaire (41), d'un moyen de blocage (67, 68) destiné à l'empêcher de glisser vers le conduit d'entrée (40), et qui est filetée extérieurement sur une longueur prédéterminée de sa partie d'extrémité (62) située vers le conduit d'entrée (40), un écrou de fixation (71) étant vissé sur sa partie filetée extérieurement (62) au niveau de sa portion qui fait saillie vers l'amont au-delà du rebord extérieur (46) du conduit d'entrée (40), et des ressorts (69) étant disposés entre l'écrou (71) et le rebord (46) du conduit d'entrée.

3. Unité de filtrage telle que définie dans la revendication 2, dans laquelle un écrou (72) destiné à hausser le conduit d'entrée (40) est vissé sur la partie filetée extérieurement (62) de la tige de raccordement (61) du côté du rebord (46) du conduit d'entrée, opposé à l'écrou de fixation (71).

4. Unité de filtrage telle que définie dans l'une quelconque des revendications 1 à 3, comprenant des moyens (75, 87) destinés à positionner le conduit intermédiaire (41) et tous les filtres (14-16) en place par rapport à leurs trois directions lorsqu'ils sont vus de dessus, des moyens (89) destinés à empêcher un déplacement du conduit intermédiaire (41) et de tous les filtres (14-16) vers la quatrième direction étant disposés de manière amovible entre le rebord extérieur (46) du conduit d'entrée (40) et le rebord extérieur (54) du conduit de sortie (44).

5. Unité de filtrage telle que définie dans la revendication 4, dans laquelle les moyens destinés à empêcher un déplacement du conduit intermédiaire (41) et de tous les filtres (14-16) vers la quatrième direction comprennent une tige (89) qui s'étend entre le rebord (46) du conduit d'entrée et le rebord (54) du conduit de sortie, la tige (89) des moyens préventifs de déplacement ayant l'une (91) de ses extrémités fixée de manière amovible au rebord (54) du conduit de sortie et son autre extrémité insérée à travers une découpe (94) élargie vers l'intérieur qui est formée dans le rebord (46) du conduit d'entrée, ladite autre extrémité de la tige (89) comportant une partie étranglée (95) formée au niveau d'une position éloignée axialement du rebord (46) du conduit d'entrée et ayant une largeur inférieure à la distance entre des bords d'entrée définissant la découpe (94).

6. Machine de conditionnement comprenant une unité de filtrage comprenant plusieurs filtres (14-16) montés en série, le filtre (14) situé au niveau d'une extrémité d'entrée étant maintenu entre un conduit d'entrée (40) muni d'un rebord extérieur (46) et un conduit intermédiaire (41) muni d'un rebord extérieur (47), le rebord extérieur (46) du conduit d'entrée (40) et le rebord extérieur (47) du conduit intermédiaire (41) étant fixés l'un à l'autre par des moyens de fixation (59), pour qu'ainsi le filtre situé au niveau de l'extrémité d'entrée soit immobilisé en place, dans laquelle les filtres (15, 16) autres que le filtre (14) situé au niveau de l'extrémité d'entrée sont maintenus entre le conduit intermédiaire (41) et un conduit de sortie (44) muni d'un rebord extérieur (54), et le rebord extérieur (47) du conduit intermédiaire (41) et le rebord extérieur (54) du conduit de sortie (44) sont fixés l'un à l'autre par d'autres moyens de fixation (74), pour qu'ainsi les filtres (15, 16) autres que le filtre (14) situé au niveau de l'extrémité d'entrée soient immobilisés en place.
